# EUROPEAN PATENT SPECIFICATION

(11) **EP 2 804 406 B1**
(45) Date of publication and mention of the grant of the patent: **01.08.2018**
(21) Application number: 13305605.1
(22) Date of filing: 14.05.2013
(51) Int. Cl.: H04W 4/23, H04W 4/50, G06Q 30/02

(54) **Method and apparatus for Real Time Bidding RTB**
Verfahren und Vorrichtung für ein Echtzeit-Bietsystem RTB
Méthode et appareil d'enchères en temps réel RTB

(43) Date of publication of application: 19.11.2014
(73) Proprietor: Alcatel Lucent, 91620 Nozay (FR)
(72) Inventor: Rebierre, Nicolas, 91300 Massy (FR); Turkiewicz, Pierre, 91530 St Maurice-Montcouronne (FR)
(74) Representative: Nokia Bell Patent Attorneys

(56) References cited:
- EP-A1- 2 523 436
- Kevin Reynolds: "Are Ad Exchanges and Real Time Bidding The Next Big Thing?", , 29 April 2010 (2010-04-29), pages 1-9, XP055097676, Retrieved from the Internet: URL:http://www.advertisingperspectives.com /adblog/media-technology/are-ad-exchanges- and-real-time-bidding-the-next-big-thing/ [retrieved on 2014-01-22]
- "RTB Project OpenRTB API Specification Version 2.1", , 1 October 2012 (2012-10-01), XP055097215, Retrieved from the Internet: URL:http://www.iab.net/media/file/OpenRTB- API-Specification-Version-2-1-FINAL.pdf [retrieved on 2014-01-20]

## Description

### FIELD OF THE INVENTION

The present invention relates to the field of real time bidding.

### BACKGROUND

Smartphone and tablet are now popular devices used frequently by their users. Advertisers and brands have realized that mobile apps represent an opportunity for them to engage interactively with their customers on their most personal device. However, brands that have developed a promotional application need to find a way to reach their target audience: make sure they are aware of the app, and then install it, use it, once and again.

Real time bidding technology allows advertizers to buy only the digital inventory they want through an automatic auction pricing mechanism, performed on an impression by impression basis. The promise of Real time bidding is to make every digital impression cost effective for advertisers, by providing them with details about the current ad viewer, and letting them define the price they would be willing to pay to be placed at the right time in front of this viewer. Technically, Real time bidding is typically implemented on Demand Side Platforms (DSP) bidding on behalf of buyers, and on Sell Side Platforms (SSP) running auctions on digital inventory and electing winners. The emerging industry standard for Real time bidding is named OpenRTB.

The objects taken into account by the OpenRTB standard are banners and videos. Thus, in a system based on OpenRTB, mobile apps can be advertised through videos and banners. However, a majority of mobile users said that automatically served in-app ad banners were interruptive. Additionally, a high percentage of users found them annoying, higher than the percentage of users who are annoyed by TV and web-based advertising. This results in lower valuation of display inventory as compared to what occurs on traditional screens, despite the mobile platform's additional targeting capabilities such as location. The document "Are Ad Exchanges and Real Time Bidding The Next Big Thing?" found that while Real Time Bidding (RTB) receives a great deal of attention, there are other attributes of Ad Exchanges that are not widely discussed. It attempts to clarify some of the concepts used in the Ad Exchange technology stack.

### SUMMARY

It is thus an object of embodiments of the present invention to propose a method and a system for real time bidding, which do not show the inherent shortcomings of the prior art.

Accordingly, embodiments relate to a method executed by a system comprising a real time bidding sell side server and at least one user terminal connected through a network,
wherein the user terminal performs the steps of:
- sending an update message containing an identifier to the real time bidding sell side server,
- receiving a bid result message from the real time bidding sell side server in response to said update message, said bid result message comprising a first icon and an URL indicating where an application associated with the icon is available for download,
- displaying a set of icons associated with applications, including said first icon, and
- in response to an activation command of one of said icons:
   a) executing the corresponding application if said application is installed on said terminal, or
   b) accessing the URL indicating where the corresponding application is available for download if said application is not installed on said terminal,
and wherein the real time bidding sell side server performs the steps of:
- receiving said update message from the terminal,
- sending a bid request message to at least one a real time bidding buy side server in reaction to the reception of said update message, said bid request message including profile data associated with the identifier of the update message,
- receiving a bid response message from said at least one real time bidding buy side server,
- selecting one of the received bid response messages, and
- sending said bid result message to the terminal, wherein the first icon and the URL of the bid result message are determined in function of the selected bid response message.

Correlatively, embodiments relate to a system comprising a real time bidding sell side server and at least one user terminal connected through a network,
wherein the user terminal comprises:
- means for sending an update message containing an identifier to the real time bidding sell side server,
- means for receiving a bid result message from the real time bidding sell side server in response to said update message, said bid result message comprising a first icon and an URL indicating where an application associated with the icon is available for download,
- means for displaying a set of icons associated with applications, including said first icon,
- means for executing the corresponding application in response to an activation command of one of said icons, if said application is installed on said terminal, and
- means for accessing the URL indicating where the corresponding application is available for download in response to an activation command of one of said icons, if said application is not installed on said terminal,
and wherein the real time bidding sell side server comprises:
- means for receiving said update message from the terminal,
- means for sending a bid request message to at least one a real time bidding buy side server in reaction to the reception of said update message, said bid request message including profile data associated with the identifier of the update message,
- means for receiving a bid response message from said at least one real time bidding buy side server,
- means for selecting one of the received bid response messages, and
- means for sending said bid result message to the terminal, wherein the first icon and the URL of the bid result message are determined in function of the selected bid response message.

The method may comprise: after accessing the URL indicating where the corresponding application is available for download, downloading and installing said application on said terminal.

In some embodiments, the method may comprises:
- in response to a detection of the execution of the application, sending, by the terminal, of a message indicating that the application has been launched to the real time bidding sell side server,
- in response to the reception of said message indicating that the application has been launched by the real time bidding sell side server:
   a) determining characteristics of the application, and
   b) updating a user profile in function of said characteristics.

In some embodiments, the method may comprises:
- receiving, by the real time bidding sell side server, a reporting URL associated with the selected bid response message,
- sending, by the terminal, a message containing usage data of the application associated with the bid result message to the real time sell side server,
- sending, by real time sell side server, a message containing the received usage data to the reporting URL.

The bid result message may also include metadata related to the real time bidding auction, and the terminal may perform the steps of:
- storing the metadata associated with the application,
- when the application is launched, transmitting the stored metadata to the application.

At least one of the bid request message and the bid response message may comply with the OpenRTB v2.1 standard, and includes at least one object in the "ext" field.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a schematic view of a system for real time bidding,
Figure 2 is a structural view of an apparatus of the system of figure 1, and
Figures 3 to 6 are diagrams showing the functioning of the system of figure 1.

### DESCRIPTION OF EMBODIMENTS

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

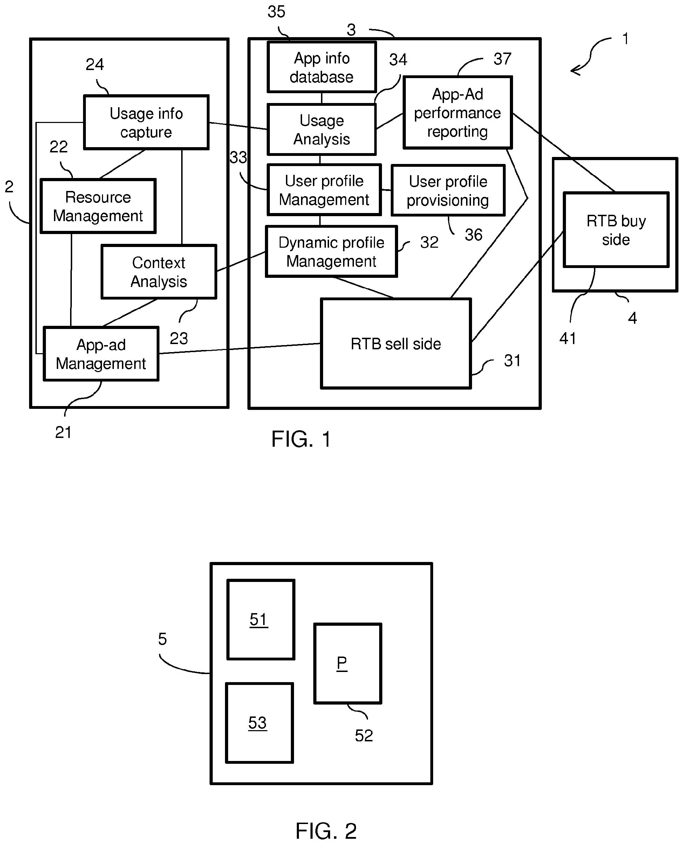

**Figure 1** shows a system 1 comprising a user terminal 2, a RTB sell side server 3 and a RTB buy side server 4 connected through a network. In practice, the system 1 may comprise a plurality of user terminals 2 and/or a plurality of RTB buy side servers 4. The system 1 uses a new advertising format based on applications, referred to as "App-ad" in the rest of this description.

The user terminal 2 is capable of executing applications. The user terminal 2 is for example a Smart phone or a tablet. In a predetermined state, corresponding for example to a "Home Screen", "Start Menu" or "Desktop", the user terminal 2 displays a set of icons corresponding to applications. The user may input an activation command on one of the icons (for example by touching an icon on a touch screen or by clicking on an icon with a pointing device). In case the activation command is performed on an icon corresponding to an application installed on the user terminal 2, the user terminal 2 launches the execution of the application. However, one of the icons may correspond to an advertisement for an application which is not yet installed on the user terminal 2. Such an icon is a proxy object of an App-ad, as is described in more detail hereafter.

The user terminal 2 comprises an App-ad management module 21, a resource management module 22, a context analysis module 23 and a usage info capture module 24.

The App-ad management module 21 is in charge of the management of App-ad resources. It performs the rendering of App-ad resources on the user terminal 2 in the form of various proxy objects, such as graphical elements, sounds, vibrations. It allows the user to interact with App-ad resources through their proxy objects. The App-ad management module 21 also manages advertising opportunities on the device. It decides when to request the RTB sell side system server 3 for RTB auctions, based on various information such as sensors data, time, user interactions with resources (available from the resource management module 22), context data (available from the context analysis module 23). It communicates with the RTB sell side server 3 to send request for and receive App-ads' data for Real Time Bidding auctions. It coordinates with the resource management module 22 to identify its boundaries within the space used for proxy objects rendering, and the behavior to have in case of proxy objects having conflicting/overlapping attributes in the rendering space between the two components. It transmits user interaction events with App-ad proxy objects (such as App-ad shortcut creation, launch) to the usage info capture module 24.

The context analysis module 23 is in charge of the characterization of the contexts in which the user is immersed, consisting in a set of information, such as activities, locations, times, surrounding devices, discrete context identifiers. It transmits contexts information to the RTB sell side server 3, the usage info capture module 24, and the App-ad management module 21.

The resource management module 22 provides an abstraction layer for the various classes of resources that are managed in the user terminal 2, such as contacts, files, applications, shortcut to external resources. It is in charge of providing the user with access to its device resources through proxy objects. It performs the rendering of resources on the user terminal 2 in the form of various proxy objects, such as graphical elements, sounds, vibrations. It handles events from the device operating system or from the user and let them perform various operations on resources, such as installation, update, configuration, launch, and removal, and on proxy objects, such as creation, positioning, launch, sharing, and removal. It coordinates with the App-ad management module 21 to identify the boundaries of the latter within the space used for proxy objects rendering, and the behavior to have in case of proxy objects having conflicting/overlapping attributes in the rendering space between the two components. It transmits user interaction events with resource proxy objects (such as resource shortcut creation, positioning, launch) to the usage info capture module 24 and the App-ad management module 21.

The usage info capture module 24 is in charge of collecting events related to the user's engagement with the user terminal 2, enriching these events with contextual information, and ensuring a reliable transmission of these events to the RTB sell side server 3. It receives events from the resource management module 22, such as app installation or removal on the user terminal 2, app shortcut creation or removal on screen, app launch, app termination, app sharing. It receives events from the App-ad management module 21, such as app launch, app sharing. The usage capture component enriches these usage events with contextual information obtained from the context analysis module 23.

The RTB sell side server 3 comprises an RTB sell side module 31, a dynamic profile management module 32, a user profile management module 33, a user profile provisioning module 36, a usage analysis module 34, an App info database 35, and an App-ad performance reporting module 37.

The RTB sell side module 31 is in charge of the management of Real Time Bidding auctions. Upon a request from the App-ad management module 21 of one user terminal 2, it submits a Real Time Bidding bid request to the RTB buy side server(s) 4 and subsequently receives Real Time Bidding bid responses, elects the auction winners, and terminates the auction by notifying the winners. It enriches the information exposed in the Real Time Bidding bid request with user profile information received from the dynamic profile management module 32. Once the Real Time Bidding auction is closed, it transmits back the winning App-ad data to the App-ad management module 21 of the user terminal 2.

The usage analysis module 34 is in charge of collecting, storing, aggregating, analyzing usage information received from the usage capture module 24 of a user terminal 2. It combines a user's app usage information with details about the apps obtained from the App info database 35 component, and infers information about each user's needs and interests in the various contexts of his life. This inferred user profile information is transmitted to the user profile management module 33.

The App info database 35 is in charge of providing information about apps that users can install on their terminal. Typical information encompass: application title, description, icon, promotional banner, download location, pricing information, publisher information, and classification information (e.g. in terms of audience maturity, content).

The user profile management module 33 is in charge of maintaining exhaustive profile information for the users of the system 1. This profile information can be assembled explicitly from the user profile provisioning module 36, and/or implicitly from the usage analysis module 34. The user's profile can be composed of multiple sub-profiles associated with specific contexts (for example: a sub-profile at work and a sub-profile at home).

The user profile provisioning module 36 allows the explicit provisioning of a user's profile. The profile information can be provided by the user himself, by the system operator, or by other systems out of the scope of this description.

The dynamic profile management module 32 is in charge of maintaining a dynamic view of a user's profile based on his/her current context. The user's dynamic profile is built with the context information obtained from the context analysis module 23 on the user's terminal 2, and with parts of his exhaustive profile obtained from the user profile management module 33 and filtered based on context information. This dynamic profile information is communicated to the advertising ecosystem by the RTB sell side module 31 when a display opportunity is processed, and is of high value for the buy side.

The App-ad performance reporting module 37 is in charge of reporting information to the RTB buy side server 4 that enables the measurement of the returns on investments in App-ad display. For this, the App-ad performance reporting module 37 correlates the app usage information obtained from the usage analysis module 34 with the App-ad RTB wins recorded by the RTB sell side module 31. The RTB protocol provides a mechanism to so that the winner of the RTB bid can be notified by the App-ad performance reporting module 37 of subsequent app usage events originated by the user who received the App-ad.

The RTB buy side server 4 comprises a RTB buy side module 41. The RTB buy side module 41 is in charge of the management of bidders, involving among other things the management of virtual seats and individual bidders' rules. It performs the evaluation of Real Time Bidding bid requests, decides how much each bidder want to bid, and responds to the RTB sell side module 31 with Real Time Bidding bid responses.

It should be noted that although figure 1 show a particular repartition of the functional modules 21-24, 31-37 and 41 between the user terminal 2, the RTB sell side system server 3 and the RTB buy side server 4, the functional modules may be located differently.

**Figure 2** is a structural view of an apparatus 5, which may be the user terminal 2, the RTB sell side server 3 or the RTB sell buy server 4. The apparatus 5 has the material architecture of a computer and comprises a processor 51, a memory 52 and a communication interface 53. The processor allows executing computer programs stored in the memory 52. The communication interface 53 allows communicating with other apparatuses of the network.

The functional modules of the system 1 shown of figure 1 may correspond to the execution of a computer program P by the respective apparatuses 5 (user terminal 2, RTB sell side system server 3, RTB sell buy system server 4).

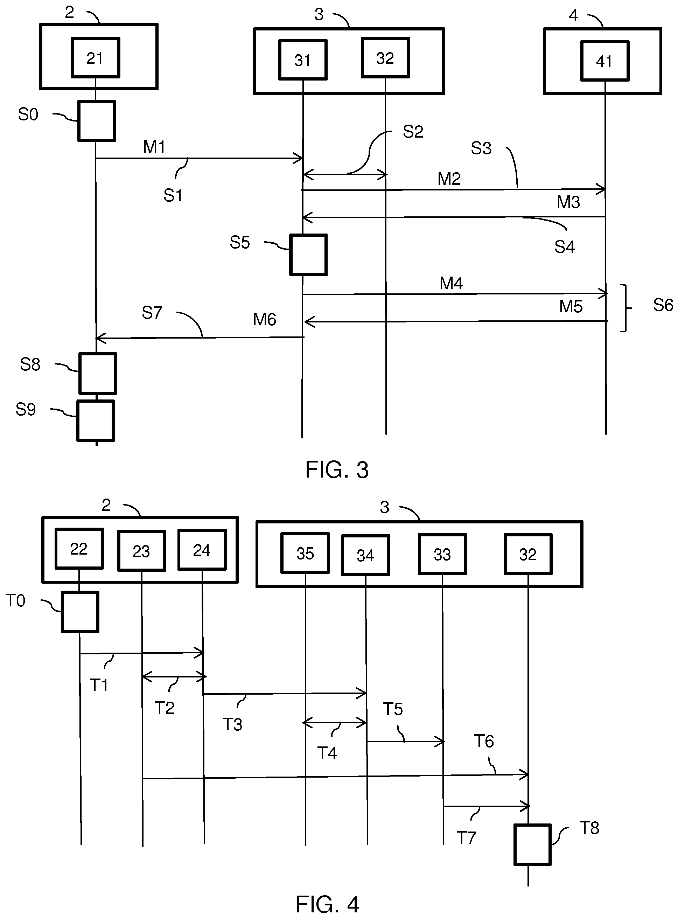

**Figure 3** is a diagram illustrating the functioning of the system 1 with respect to the creation of the advertising inventory.

Initially, the App-ad management module 21 of a user terminal 2 decides - for example upon the expiration of one of its internal timers - to trigger a refresh of the App-ad object (step S0). Thus, the App-ad management module 21 sends an update message M1 containing an identifier of the user terminal 2 to the RTB sell side server 3 (step S1).

The dynamic profile management module 32 uses received identifier to retrieve the corresponding user's dynamic profile (step S2). The dynamic profile comprises for example:
- Information about the user's current location
- Information about the user's current centers of interests, such as "interest1", "interest2"
- General information about the user, such as his age

The dynamic profile management module 32 transmits those information to the RTB sell side module 31.

The RTB sell side module 31 initiates an auction by sending a bid request message M2 to each of the RTB buy side server 4 it is connected to (step S3). The bid request message M2 includes the user information provided by the dynamic profile management module 32.

The bid request message M2 may have the format defined in the openRTB standard v2.1 for example. In that case, user's current location can be used in the openRTB Bid Request "geo object" field of the "user object" object, user's current centers of interests can be used in the openRTB Bid Request "keywords" field of the "user object", general information about the user can be used in the openRTB Bid Request "user object", for example the user's age can be used in the "yob" field.

The RTB sell side module 31 and the RTB buy side module 41 implement, as an example, the OpenRTB protocol v2.1 and use an extension of this protocol to support the App-ad format. In the protocol defined by the OpenRTB standard v2.1, the Impression Object only supports Banner objects and Video objects. To introduce the App-ad digital inventory to OpenRTB, a new app object could be defined as follow:

| Field | Scope | Type | Description |
|---|---|---|---|
| w | Mandatory | Integer | Width of the impression in density independent pixels. |
| h | Mandatory | Integer | Height of the impression in density independent pixels. |
| pos | Optional | Integer | App position on the user screen. The enumeration currently defined defined in OpenRTB v2.1 table 6.5, extended with values defining more detailed regions on the device screen where the impression app object is centered, such as center, center up, center down, center left, center right, top left, top right, bottom left, bottom right. |

In the protocol defined by the OpenRTB standard v2.1, the Bid Request (defined in OpenRTB v2.1 chapter 3.3.1) and Impression (defined in OpenRTB v2.1 chapter 3.3.2) objects support an optional "ext" (extensions) field that is to be used as placeholder for custom JSON agreed to by the parties in an OpenRTB transaction. In an embodiment, this "ext" field includes an App-ad object containing the App object JSON defined above. Thus, an example of the bid request message M2 may include:

```
         "ext" : {
            "appad" : {
                  "w": 300,
                  "h": 250,
                  "pos": 1
                  }
            }
```

Then, some of the RTB buy side servers 4 respond to the RTB sell side module 31 with a bid response message M3 (step S4). The bid response message M3 may have the format defined in the openRTB standard v2.1. In that case, the Bid Object only supports ad markup, typically used for Banner and Video ads. To introduce the App-ad digital inventory to OpenRTB, a new App-ad object could be defined as follow.

| Field | Scope | Type | Description |
|---|---|---|---|
| name | Mandatory | String | Name of the app |
| appuri | Mandatory | String | Unique identifier of the application on the target platform. For instance on android, this would be the application's package name. |
| iconurl | Mandatory | String | URL pointing to app icon resource |
| detailsurl | Mandatory | String | URL pointing to app detail page on app shop |

The "ext" field of the Bid object (defined in OpenRTB v2.1 chapter 4.3.3) could include a "appad" object containing the Advertised App object JSON defined earlier. In that case, an example of bid response message M3 comprises:

```
         "ext": {
            "appad": {
                  "name":"my app ad",
                  "appuri":"com.myapp.ad",
            "iconurl":"http://www.ad.resources.com/icons/theappicon.png",
            "detailurl":"http://myappshop.com/details?pn=com.myapp.ad"
            }
         }
```

Upon reception of bid response messages M3 and after expiration of the auction, the RTB sell side module 31 selects a winner among the bidders (step S5), and notifies it through the openRTB Win Notification procedure (step S6).

The RTB sell side module 31 extracts the App-ad data of the bid winner either from its bid response message M3, or from its response M5 to the Win Notification message M4, as described in the openRTB protocol. In this embodiment, App-ad data are provided in the bid response message M3 sent by the bid winner during the auction.

The RTB sell side module 31 then transmits a bid result message M6 including these App-ad data to the App-ad management module 21 of the user terminal 2 (step S7).

In this embodiment, we consider that the user terminal is a Smartphone with a touch screen. After receiving the bid result message M6, the App-ad management module 21 then displays the corresponding App-ad icon in the area allocated to the display of the App-ad, and associates the "touch" user interaction to a redirection to the download/install page on an app shop, corresponding to the application advertised by the App-ad (step S8). The App-ad icon is displayed on the home screen of the user terminal 2, together with icons associated with applications already installed on the user terminal 2.

When the user touches the App-ad icon on his touch screen, he is redirected to the URL included in the bid result message M6 (step S9). This URL points to a part of an app shop where the user can download/install the application advertised by the App-ad.

**Figure 4** is a diagram illustrating the functioning of the system 1 with respect to the creation of value for the advertising inventory, by maintaining the user's dynamic profile.

Initially, the user opens an application by touching the corresponding resource proxy object (e.g. icon) on the home screen. As a result, the resource management module 22 starts the application (step T0). Also, the resource management module 22 lets the usage info capture module 24 know that the application was launched (step T1). The application may be an application installed on the user terminal 2 through the process of Figure 3 or any other application, such as a pre-installed application or an application downloaded from an app-store after accessing the app-store in a conventional manner.

The usage info capture module 24 retrieves the current context details (such as location, time, time zone, context identifier) from the context analysis module 23, and enriches the usage information with it (step T2). Then, the usage info capture module 24 transmits the context-enriched usage traces to the usage analysis module 34 of the RTB sell side server 3, through the network (step T3).

The usage analysis module 34 combines the app usage information with the semantic information about the applications (such as: classification according to IAB content categories, keywords) obtained from the App Info Database module 35 (step T4). Thereby, it infers a semantic characterization of the user's needs and wants in his/her various contexts of life, embodied as a set of IAB categories and keywords.

Then, the usage analysis module 34 updates the user's profile stored in the user profile management module 33 on the basis of the analysis performed at step T4 (step T5).

The context analysis module 23 provides the details about the current context (location, time, time zone, contextid) to the dynamic profile management module on a periodic basis (step T6). The dynamic profile management module 32 can also extract the pieces of information from the user's profile that are relevant in the current context, which results in the user's dynamic profile (step T7).

The dynamic profile may be used for example for further RTB auctions (step T8).

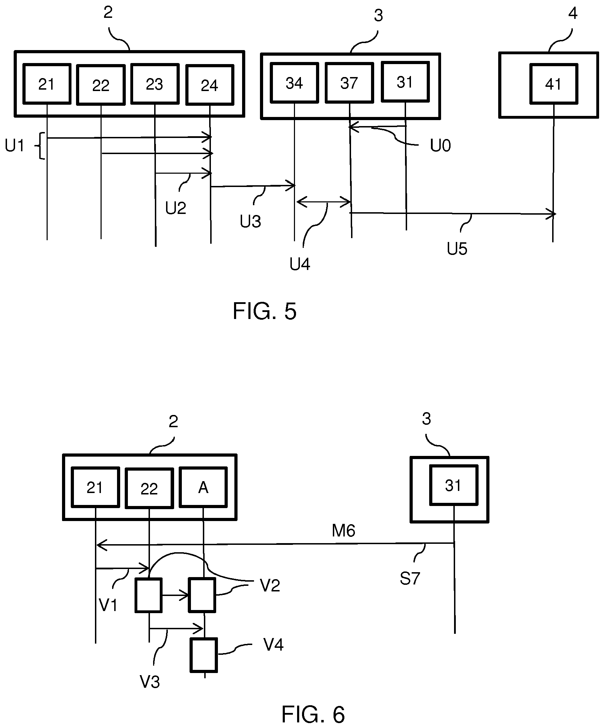

**Figure 5** is a diagram illustrating the functioning of the system 1 with respect to the reporting of the advertising inventory performance.

To be able to report the performance of the App-ad digital inventory, the "ext" field of the Bid object (defined in OpenRTB v2.1 chapter 4.3.3) is extended to include a "pmurl" field to vehicle a Performance Measurement and Reporting URL, defined as follow:

| Field | Scope | Type | Description |
|---|---|---|---|
| pmurl | Mandatory | String | URL to be used to send App-Ad Performance Measurement reports. |

The Performance Measurement and Reporting URL would be provided by the RTB buy side server 4 and would be invoked by the App-ad performance reporting module 37 upon receipt of usage traces subsequent to the bid. The substitution macros described in OpenRTB v2.1 chapter 4.6 may apply to this URL. A performance measurement record object may be transmitted to that URL, for example with a HTTP POST. According to an example, that object has the following format:

| Field | Scope | Type | Description |
|---|---|---|---|
| etype | Mandatory | String | Type of app usage event: |
| | | | - review |
| | | | - install |
| | | | - uninstall |
| | | | - shortcut |
| | | | - unshortcut |
| | | | - use |
| | | | - share |
| etime | Optional | String | The event time, for example in RFC 3339 format |

According to an example, the bid response message M3 including the "pmurl" field comprises:

```
"ext": {
"appad": {
"name":"my app ad",
"appuri":"com.myapp.ad",
"iconurl":"http://www.ad.resources.com/icons/theappicon.png",
"detailurl":"http://myappshop.com/details?pn=com.myapp.ad"
},
"pmurl": "http://adserver.com/pmnotice?auctionid=${AUCTION_ID}"
}
```

According to an example, the Performance Measurement and Reporting POST message sent to the URL provided in the Bid object's "pmurl" field after macro substitution: http://adserver.com/pmnotice?auctionid=1234534625254

```
         {
         "etype":"review",
         "etime":" 2011-08-30T09:30:16.768-04:00"
         }
```

When the RTB sell side module 31 elects a winner for a bid, it reports to the App-Ad performance reporting module 37 the following details : user identifier, app identifier, performance reporting URL (with substitution macros processed) (step U0). In the following steps, we assume that an App-Ad has been pushed to the user's terminal 2 with the mechanism described with reference to figure 2.

The usage info capture module 24 receives and stores information about usage of the App-Ad (Step U1). For example, when the user clicks on the App-ad, the App-ad management module 21 informs the usage info capture module 24, that records a usage with the APP REVIEW type (which means the user is about to get more details about the app). Also, when the user launches the application from the home screen (for instance using a shortcut), the resource management module 22 informs the usage info capture module 24, that records a usage with the APP LAUNCH type. When the user installs or uninstalls an application on the terminal 2, the resource management module 22 informs the usage info capture module 24, that records a usage with the APP INSTALL or UNINSTALL type. When the user creates a shortcut for an app on the home screen, the resource management module 22 informs the usage info capture module 24, that records the usage with the APP SHORTCUT or APP UNSHORTCUT type. When the user shares a shortcut to an app from the home screen, the resource management module 22 informs the usage info capture module 24 , that records the usage with the APP SHARE.

The usage info capture module 24 retrieves the current context details (such as location, time, time zone, context identifier) from the context analysis module 23, and enriches the usage information with it (step U2). Then, the usage capture module 24 transmits the context-enriched usage traces to the usage analysis module 34 of the RTB sell side server 3, through the network (step U3).

The App-ad performance reporting module 37 retrieves the usage traces that match the user identifier and the app identifier from the usage analysis module 34 (step U4).

Finally, for each usage trace found in step U4, the App-Ad performance reporting module 37 reports to the performance URL provided in step U0 for the matching user identifier and the app identifier (step U5). For example, a performance measurement object as described in the table above is passed to the URL with an HTTP POST request.

**Figure 6** is a diagram illustrating the functioning of the system 1 with respect to conversion tracking.

As explained previously, at step S7, the RTB sell side module 31 transmits a bid result message M6 including App-ad data to the App-ad management module 21 of the user terminal 2. In the embodiment of Figure 6, the bid result message M6 also includes additional metadata related to the RTB auction. For example, the additional metadata of the bid result message M6 may include the set of information listed in the OpenRTB v2.1 chapter 4.6, such as:
- ID of the bid request; from "id" attribute.
- ID of the bid; from "bidid" attribute.
- ID of the impression just won; from "impid" attribute.
- ID of the bidder's seat for whom the bid was made.
- ID of the ad markup the bidder wishes to serve; from "adid" attribute.
- Settlement price using the same currency and units as the bid.
- The currency used in the bid (explicit or implied); for confirmation only.

When the App-ad management module 21 receives bid result message M6, it transmits this additional metadata to the resource management module 22 (step V1).

Later, assuming that the application has been installed, the user launches the application, for instance using a shortcut on the home screen (step V2).

When an application is launched, the resource management module 22 determines whether metadata for the app to be launched exist. In the affirmative, the resource management module 22 transmits them to the application (step V3), for example as additional attributes to the application launch Intent.

Once launched, the application can retrieve the App-ad metadata and use them for ad-hoc conversion tracking purpose (step V4). The application and external conversion tracking system components are out of the scope of this description.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method executed by a system (1) comprising a real time bidding sell side server (3) and at least one user terminal (2) connected through a network, wherein the user terminal (2) performs the steps of:
- sending (S1) an update message (M1) containing an identifier to the real time bidding sell side server (3),
- receiving (S7) a bid result message (M6) from the real time bidding sell side server (3) in response to said update message (M1), said bid result message (M6) comprising a first icon and an URL indicating where an application associated with the icon is available for download,
- displaying (S8) a set of icons associated with applications, including said first icon, and
- in response to an activation command of one of said icons:
c) executing the corresponding application if said application is installed on said terminal, or
d) accessing (S9) the URL indicating where the corresponding application is available for download if said application is not installed on said terminal,
and wherein the real time bidding sell side server (3) performs the steps of:
- receiving (S1) said update message (M1) from the terminal (2),
- sending (S3) a bid request message (M2) to at least one a real time bidding buy side server (4) in reaction to the reception of said update message (M1), said bid request message (M2) including profile data associated with the identifier of the update message (M1),
- receiving (S4) a bid response message (M3) from said at least one real time bidding buy side server (4),
- selecting (S5) one of the received bid response messages (M3), and
- sending (S7) said bid result message (M6) to the terminal (2), wherein the first icon and the URL of the bid result message (M6) are determined in function of the selected bid response message (M3).

2. Method according to claim 1, comprising:
- after accessing the URL indicating where the corresponding application is available for download, downloading and installing said application on said terminal.

3. Method according to one of claims 1 and 2, comprising:
- in response to a detection of the execution of one of the applications, sending (T3), by the terminal (2), of a message indicating that the application has been launched to the real time bidding sell side server (3),
- in response to the reception of said message indicating that the application has been launched by the real time bidding sell side server:
a) determining (T4) characteristics of the application, and
b) updating (T5, T6, T7) a user profile in function of said characteristics.

4. Method according to one of claims 1 to 3, comprising:
- receiving (S4, S6), by the real time bidding sell side server (3), a reporting URL associated with the selected bid response message (M3),
- sending (U3), by the terminal (2), a message containing usage data of the application associated with the bid result message (M3) to the real time sell side server (3),
- sending (U5), by real time sell side server (3), a message containing the received usage data to the reporting URL.

5. Method according to one of claims 1 to 4, wherein the bid result message (M6) also includes metadata related to the real time bidding auction, and the terminal (2) performs the steps of:
- storing the metadata associated with the application (V1),
- when the application is launched (V2), transmitting the stored metadata to the application (V3).

6. Method according to one of claims 1 to 5, wherein at least one of the bid request message (M2) and the bid response message (M3) complies with the OpenRTB v2.1 standard, and includes at least one object in the "ext" field.

7. System (1) comprising a real time bidding sell side server (3) and at least one user terminal (2) connected through a network,
wherein the user terminal (2) comprises:
- means for sending an update message (M1) containing an identifier to the real time bidding sell side server (3),
- means for receiving a bid result message (M6) from the real time bidding sell side server in response to said update message, said bid result message comprising a first icon and an URL indicating where an application associated with the icon is available for download,
- means for displaying a set of icons associated with applications, including said first icon,
- means for executing the corresponding application in response to an activation command of one of said icons, if said application is installed on said terminal, and
- means for accessing the URL indicating where the corresponding application is available for download in response to an activation command of one of said icons, if said application is not installed on said terminal,
and wherein the real time bidding sell side server (3) comprises:
- means for receiving said update message from the terminal,
- means for sending a bid request message (M2) to at least one a real time bidding buy side server (4) in reaction to the reception of said update message, said bid request message including profile data associated with the identifier of the update message,
- means for receiving a bid response message (M3) from said at least one real time bidding buy side server,
- means for selecting one of the received bid response messages, and
- means for sending said bid result message to the terminal, wherein the first icon and the URL of the bid result message are determined in function of the selected bid response message.

## Patentansprüche

1. Verfahren, ausgeführt von einem System (1), umfassend einen Echtzeit-Bidding-Sell-Side-Server (3) und mindestens ein Benutzerendgerät (2), das über ein Netzwerk verbunden ist, wobei das Benutzerendgerät (2) die folgenden Schritte durchführt:
- Senden (S1) einer Aktualisierungsnachricht (M1), die eine Kennung enthält, an den Echtzeit-Bidding-Sell-Side-Server (3),
- Empfangen (S7) einer Angebotsergebnisnachricht (M6) von dem Echtzeit-Bidding-Sell-Side-Server (3) als Antwort auf besagte Aktualisierungsnachricht (M1), wobei besagte Angebotsergebnisnachricht (M6) ein erstes Symbol und eine URL umfasst, wo eine Anwendung angegeben wird, die mit dem Symbol verbunden ist und die zum Herunterladen bereitsteht,
- Anzeigen (S8) eines Satzes von Symbolen, die mit Anwendungen verbunden sind, einschließlich besagten ersten Symbols, und
- Als Antwort auf einen Aktivierungsbefehl eines besagter Symbole:
c) Ausführen der entsprechenden Anwendung, wenn besagte Anwendung auf besagtem Endgerät installiert ist, oder
d) Zugreifen (S9) auf die URL, die angibt, wo die entsprechende Anwendung zum Herunterladen zur Verfügung steht, wenn besagte Anwendung nicht auf besagtem Endgerät installiert ist,
und wobei der Echtzeit-Bidding-Sell-Side-Server (3) die folgenden Schritte durchführt:
- Empfangen (S1) besagter Aktualisierungsnachricht (M1) von dem Endgerät (2),
- Senden (S3) einer Angebotsanforderungsnachricht (M2) an mindestens einen Echtzeit-Bidding-Buy-Side-Server (4) als Reaktion auf das Empfangen besagter Aktualisierungsnachricht (M1), wobei besagte Angebotsanforderungsnachricht (M2) Profildaten einschließt, die mit der Kennung der Aktualisierungsnachricht (M1) verbunden ist,
- Empfangen (S4) einer Angebotsantwortnachricht (M3) von besagtem mindestens einen Echtzeit-Bidding-Buy-Side-Server (4),
- Auswählen (S5) einer der empfangenden Angebotsantwortnachrichten (M3), und
- Senden (S7) besagter Angebotsergebnisnachricht (M6) an das Endgerät (2), wobei das erste Symbol und die URL der Angebotsergebnisnachricht (M6) bestimmt werden in Funktion der ausgewählten Angebotsantwortnachricht (M3).

2. Verfahren nach Anspruch 1, umfassend:
- nach dem Zugreifen auf die URL, die angibt, wo die entsprechende Anwendung zum Herunterladen zur Verfügung steht, Herunterladen und Installieren besagter Anwendung auf besagtem Endgerät.

3. Verfahren nach einem der Ansprüche 1 bis 2, umfassend:
- als Antwort auf ein Erkennen der Ausführung einer der Anwendungen, Senden (T3), durch das Endgerät (2), einer Nachricht, die anzeigt, dass die Anwendung gestartet worden ist auf dem Echtzeit-Bidding-Sell-Side-Server (3),
- als Antwort auf das Empfangen besagter Nachricht, die anzeigt, dass die Anwendung durch den Echtzeit-Bidding-Sell-Side-Server:
a) Bestimmen (T4) der Eigenschaften der Anwendung, und
b) Aktualisieren (T5, T6, T7) eines Benutzerprofils in Funktion besagter Eigenschaften.

4. Verfahren nach einem der Ansprüche 1 bis 3, umfassend:
- Empfangen (S4, S6), durch den Echtzeit-Bidding-Sell-Side-Server (3), einer Reporting-URL, die mit der ausgewählten Angebotsantwortnachricht (M3) verbunden ist,
- Senden (U3), durch das Endgerät (2), einer Nachricht, die Gebrauchsdaten der Anwendung enthält, die verbunden ist mit der Angebotsergebnisnachricht (M3), an den Echtzeit-Sell-Side-Server (3),
- Senden (U5), durch den Echtzeit-Sell-Side-Server (3), einer Nachricht, die die empfangenen Gebrauchsdaten enthält, an die Reporting-URL.

5. Verfahren nach einem der Ansprüche 1 bis 4, wobei die Angebotsergebnisnachricht (M6) auch Metadaten enthält, die in Beziehung stehen zur Echtzeit-Bietauktion, und das Endgerät (2) die folgenden Schritte durchführt:
- Speichern der Metadaten, die mit der Anwendung (V1) verbunden sind,
- wenn die Anwendung gestartet wird (V2), Übertragen der gespeicherten Metadaten auf die Anwendung (V3).

6. Verfahren nach einem der Ansprüche 1 bis 5, wobei mindestens eine aus Angebotsanforderungsnachricht (M2) und Angebotsantwortnachricht (M3) den OpenRTB v2.1 Standard erfüllt und mindestens ein Objekt im Feld "ext" einschließt.

7. System (1), umfassend einen Echtzeit-Bidding-Sell-Side-Server (3) und mindestens ein Benutzerendgerät (2), das über ein Netzwerk verbunden ist,
wobei das Benutzerendgerät (2) umfasst:
- Mittel zum Senden einer Aktualisierungsnachricht (M1), die eine Kennung enthält, an den Echtzeit-Bidding-Sell-Side-Server (3),
- Mittel zum Empfangen einer Angebotsergebnisnachricht (M6) von dem Echtzeit-Bidding-Sell-Side-Server als Antwort auf besagte Aktualisierungsnachricht, wobei besagte Angebotsergebnisnachricht ein erstes Symbol und eine URL enthält, die anzeigt, wo eine Anwendung, die mit dem Symbol verbunden ist, zum Herunterladen verfügbar ist,
- Mittel zum Anzeigen eines Satzes von Symbolen, die mit Anwendungen verbunden sind, einschließlich besagten ersten Symbols,
- Mittel zum Ausführen der entsprechenden Anwendung als Antwort auf einen Aktivierungsbefehl eines besagter Symbole, wenn besagte Anwendung auf besagtem Endgerät installiert ist, und
- Mittel zum Zugreifen auf die URL, die anzeigt, wo die entsprechende Anwendung zum Herunterladen zur Verfügung steht als Antwort auf einen Aktivierungsbefehl eines besagter Symbole, wenn besagte Anwendung auf besagtem Endgerät nicht installiert ist,
und wobei der Echtzeit-Bidding-Sell-Side-Server (3) umfasst:
- Mittel zum Empfangen besagter Aktualisierungsnachricht von dem Endgerät,
- Mittel zum Senden einer Angebotsanforderungsnachricht (M2) an mindestens einen Echtzeit-Bidding-Buy-Side-Server (4) als Reaktion auf das Empfangen besagter Aktualisierungsnachricht, wobei besagte Angebotsanforderungsnachricht Profildaten einschließt, die verbunden sind mit der Kennung der Aktualisierungsnachricht,
- Mittel zum Empfangen einer Angebotsantwortnachricht (M3) von besagtem mindestens einen Echtzeit-Bidding-Buy-Side-Server,
- Mittel zum Auswählen einer der empfangenden Angebotsantwortnachrichten, und
- Mittel zum Senden besagter Angebotsergebnisnachricht an das Endgerät, wobei das erste Symbol und die URL der Angebotsergebnisnachricht bestimmt werden in Funktion der ausgewählten Angebotsantwortnachricht.

## Revendications

1. Procédé exécuté par un système (1) comprenant un serveur côté vente d'offre en temps réel (3) et au moins un terminal utilisateur (2) connectés par un réseau, le terminal utilisateur (2) exécutant les étapes suivantes :
- envoyer (S1) au serveur côté vente d'offre en temps réel (3) un message de mise à jour (M1) contenant un identifiant,
- recevoir (S7) un message de résultat d'offre (M6) à partir du serveur côté vente d'offre en temps réel (3) en réponse audit message de mise à jour (M1), ledit message de résultat d'offre (M6) comprenant une première icône et une adresse URL indiquant l'endroit où une application associée à l'icône peut être téléchargée,
- afficher (S8) un ensemble d'icônes associées à des applications, y compris ladite première icône, et
- en réponse à une commande d'activation d'une desdites icônes :
c) exécuter l'application correspondante si ladite application est installée sur ledit terminal, ou
d) accéder (S9) à l'adresse URL indiquant l'endroit où l'application correspondante peut être téléchargée si ladite application n'est pas installée sur ledit terminal,
et le serveur côté vente d'offre en temps réel (3) exécutant les étapes suivantes :
- recevoir (S1) ledit message de mise à jour (M1) à partir du terminal (2),
- envoyer (S3) un message de demande d'offre (M2) à au moins un serveur côté achat d'offre en temps réel (4) en réaction à la réception dudit message de mise à jour (M1), ledit message de demande d'offre (M2) contenant des données de profil associées à l'identifiant du message de mise à jour (M1),
- recevoir (S4) un message de réponse à l'offre (M3) à partir dudit au moins un serveur côté achat d'offre en temps réel (4),
- sélectionner (S5) un des messages de réponse à l'offre (M3) reçus, et
- envoyer (S7) ledit message de résultat d'offre (M6) au terminal (2), la première icône et l'adresse URL du message de résultat d'offre (M6) étant déterminées en fonction du message de réponse à l'offre (M3) sélectionné.

2. Procédé selon la revendication 1, comprenant :
- après avoir accédé à l'adresse URL indiquant l'endroit où l'application correspondante peut être téléchargée, télécharger et installer ladite application sur ledit terminal.

3. Procédé selon l'une des revendications 1 et 2, comprenant les étapes suivantes :
- en réponse à une détection de l'exécution d'une des applications, envoyer (T3), au moyen du terminal (2), un message indiquant que l'application a été lancée vers le serveur côté vente d'offre en temps réel (3),
- en réponse à la réception dudit message indiquant que l'application a été lancée par le serveur côté vente d'offre en temps réel :
a) déterminer (T4) des caractéristiques de l'application, et
b) mettre à jour (T5, T6, T7) un profil d'utilisateur en fonction desdites caractéristiques.

4. Procédé selon l'une des revendications 1 à 3, comprenant les étapes suivantes :
- recevoir (S4, S6), au moyen du serveur côté vente d'offre en temps réel (3), une adresse URL de rapport associée au message de réponse à l'offre (M3) sélectionné,
- envoyer (U3), au moyen du terminal (2), un message contenant des données d'utilisation de l'application associée au message de résultat d'offre (M3) au serveur côté vente d'offre en temps réel (3),
- envoyer (U5), au moyen du serveur côté vente d'offre en temps réel (3), un message contenant les données d'utilisation reçues à l'adresse URL de rapport.

5. Procédé selon l'une des revendications 1 à 4, dans lequel le message de résultat d'offre (M6) comprend aussi des métadonnées relatives à l'enchère en temps réel, et le terminal (2) exécute les étapes suivantes :
- stocker les métadonnées associées à l'application (V1),
- lorsque l'application est lancée (V2), transmettre les métadonnées stockées à l'application (V3).

6. Procédé selon l'une des revendications 1 à 5, dans lequel au moins un message parmi le message de demande d'offre (M2) et le message de réponse à l'offre (M3) est conforme à la norme OpenRTB v2.1 et comprend au moins un objet dans le champ « ext ».

7. Système (1) comprenant un serveur côté vente d'offre en temps réel (3) et au moins un terminal utilisateur (2) connectés par un réseau,
le terminal utilisateur (2) comprenant :
- des moyens pour envoyer au serveur côté vente d'offre en temps réel (3) un message de mise à jour (M1) contenant un identifiant,
- des moyens pour recevoir un message de résultat d'offre (M6) à partir du serveur côté vente d'offre en temps réel en réponse audit message de mise à jour, ledit message de résultat d'offre comprenant une première icône et une adresse URL indiquant l'endroit où une application associée à l'icône peut être téléchargée,
- des moyens pour afficher un ensemble d'icônes associées à des applications, y compris ladite première icône,
- des moyens pour exécuter l'application correspondante en réponse à une commande d'activation d'une desdites icônes, si ladite application est installée sur ledit terminal, et
- des moyens pour accéder à l'adresse URL indiquant l'endroit où l'application correspondante peut être téléchargée en réponse à une commande d'activation d'une desdites icônes, si ladite application n'est pas installée sur ledit terminal,
et le serveur côté vente d'offre en temps réel (3) comprenant :
- des moyens pour recevoir ledit message de mise à jour à partir du terminal,
- des moyens pour envoyer un message de demande d'offre (M2) à au moins un serveur côté achat d'offre en temps réel (4) en réaction à la réception dudit message de mise à jour, ledit message de demande d'offre contenant des données de profil associées à l'identifiant du message de mise à jour,
- des moyens pour recevoir un message de réponse à l'offre (M3) à partir dudit au moins un serveur côté achat d'offre en temps réel,
- des moyens pour sélectionner un des messages de réponse à l'offre reçus, et
- des moyens pour envoyer ledit message de résultat d'offre au terminal, la première icône et l'adresse URL du message de résultat d'offre étant déterminées en fonction du message de réponse à l'offre sélectionné.
